# EUROPÄISCHE PATENTSCHRIFT

(11) **EP 2 217 479 B1**
(45) Veröffentlichungstag und Bekanntmachung des Hinweises auf die Patenterteilung: **03.10.2012**
(21) Anmeldenummer: 08858801.7
(22) Anmeldetag: 02.12.2008
(51) Int. Cl.: B60W 20/00, B60W 30/18, B60W 10/02, B60W 10/08, B60W 10/26, B60K 6/48

(54) **VERFAHREN UND VORRICHTUNG ZUR STEUERUNG EINES KRIECHBETRIEBES EINES FAHRZEUGS MIT EINEM HYBRIDANTRIEB**
METHOD AND DEVICE FOR CONTROLLING A CREEP MODE OF A VEHICLE HAVING A HYBRID DRIVE SYSTEM
PROCÉDÉ ET DISPOSITIF SERVANT À COMMANDER LE FONCTIONNEMENT EN VITESSE EXTRALENTE D'UN VÉHICULE POSSÉDANT UN ENTRAÎNEMENT HYBRIDE

(30) Priorität: 13.12.2007 DE 102007055787
(43) Veröffentlichungstag der Anmeldung: 18.08.2010
(73) Patentinhaber: ZF Friedrichshafen AG, 88038 Friedrichshafen (DE)
(72) Erfinder: KALTENBACH, Johannes, 88048 Friedrichshafen (DE); BORNTRÄGER, Kai, 88085 Langenargen (DE); WALLNER, Stefan, A-5163 Mattsee (AT); MITTELBERGER, Christian, 88212 Ravensburg (DE)
(86) Internationale Anmeldenummer: PCT/EP2008/066577
(87) Internationale Veröffentlichungsnummer: WO 2009/074480

(56) Entgegenhaltungen:
- EP-A- 1 731 802
- EP-A- 1 862 364
- DE-A1- 10 158 536

## Beschreibung

Die Erfindung betrifft ein Verfahren und eine Vorrichtung zur Steuerung eines Kriechbetriebes eines Fahrzeugs mit einem Hybridantrieb gemäß dem Oberbegriff des Patentanspruchs 1.

Hybridabtriebe gewinnen im Fahrzeugbau aufgrund ihres Potenzials zur Verringerung von Schadstoffemissionen und Energieverbrauch zunehmend an Bedeutung. Derartige Fahrzeuge weisen verschiedenartige Antriebsquellen auf, wobei insbesondere Kombinationen von Verbrennungs- und Elektromotoren von Vorteil sind, da sie einerseits die Reichweiten- und Leistungsvorteile von Brennkraftmaschinen und andererseits die flexiblen Einsatzmöglichkeiten der elektrischen Maschinen als alleinige oder Hilfsantriebsquelle oder als Startergenerator sowie als Generator zur Stromerzeugung und Rekuperation nutzen können.

Vom Markt werden Hybrid-Antriebsstränge gefordert, die möglichst ohne zusätzlichen Bauraumbedarf, bei möglichst geringer Kompliziertheit und bei geringem Kosten- und Konstruktionsaufwand in Fahrzeuge implementiert werden können. Dabei werden grundsätzlich zwei Hybrid-Topologien, der Serienhybrid und der Parallelhybrid unterschieden. Solche Anordnungen sind bereits bekannt und werden ständig weiterentwickelt.

Beim Serienhybrid sind die Antriebsmaschinen antriebstechnisch hintereinander geschaltet. Dabei dient der Verbrennungsmotor, beispielsweise ein Dieselmotor, als Antrieb für einen Generator, der eine elektrische Antriebsmaschine speist. Das Fahrzeug wird somit ausschließlich über die Elektromaschine angetrieben. Der Verbrennungsmotor ist hingegen von den Antriebsrädern entkoppelt und kann daher ständig in einem einzigen Betriebspunkt, also bei einem bestimmten Drehmoment und konstanter Drehzahl betrieben werden. Dieses Antriebskonzept eignet sich beispielsweise für Busse im städtischen Kurzstreckenverkehr, wobei vorzugsweise ein Betriebspunkt, bei dem der Wirkungsgrad des Verbrennungsmotors möglichst hoch ist und gleichzeitig Schadstoffemissionen, Kraftstoffverbrauch und Geräuschentwicklung in einem günstigen Bereich liegen, eingestellt wird. Ungünstig wirkt sich beim Serienhybrid dagegen aus, dass der Wirkungsgrad des Antriebs aufgrund der mechanischelektrischen Mehrfachumwandlung eingeschränkt ist.

Demgegenüber bieten Parallelhybrid-Antriebstränge durch eine bezüglich des Kraftflusses parallele Anordnung der Triebstrangaggregate neben der Überlagerung der Antriebsmomente die Möglichkeit der Ansteuerung mit rein verbrennungsmotorischem Antrieb oder rein elektromotorischem Antrieb. Funktionell kann beim Parallelhybrid der Verbrennungsmotor durch jeweiliges Belasten bzw. Unterstützen mittels einer oder mehrerer elektrischer Maschinen weitgehend bei optimalem Drehmoment betrieben werden, so dass der maximale Wirkungsgrad des Verbrennungsmotors effektiv genutzt werden kann. Durch die elektromotorische Unterstützung des Verbrennungsmotors verringert sich im Mittel der Kraftstoffverbrauch. Da bei kurzzeitigen erhöhten Leistungsanforderungen im sogenannten Boostbetrieb, beispielsweise bei Überholvorgängen, eine Summierung der Antriebsleistung möglich ist, kann der Verbrennungsmotor nahezu ohne Einbußen an Leistung und Fahrkomfort des Fahrzeuges vergleichsweise kleiner und gewichts- sowie bauraumsparender ausgelegt werden, was sich zusätzlich emissionsverringernd und kostengünstig auswirkt. Die Elektromaschine kann zudem als integrierter Startergenerator (ISG) zum Start des Verbrennungsmotors über eine Kupplung fungieren. Weiterhin kann die elektrische Maschine im generatorischen Betrieb zum Laden eines elektrischen Energiespeichers dienen und zur Rekuperation im Bremsbetrieb eingesetzt werden. Als Getriebe zur Variation von Übersetzungen des Antriebes kommen grundsätzlich alle Formen von Fahrzeuggetrieben in Betracht.

Bei einem Parallelhybrid-Antrieb kann im praktischen Fahrbetrieb, abhängig von einer jeweiligen Hybrid-Betriebsstrategie, die Antriebsform des Fahrzeuges zwischen verbrennungsmotorischem Antrieb, elektromotorischem Antrieb und gemischtem Antrieb häufig wechseln. Die wechselnde Anbindung der Elektromaschine und des Verbrennungsmotors in den Antriebsstrang wird meist über Kupplungen realisiert. Dabei werden Zwei-Kupplungsanordnungen (2K) und Ein-Kupplungsanordnungen (1 K) unterschieden, wobei bei beiden Konzepten die Elektromaschine als integrierter Startergenerator (2K-ISG bzw. 1 K-ISG - Anordnung) fungieren kann. Bei einem 2K-ISG - Antriebsstrang, wie beispielsweise aus der US 2005 022 1947 A1 bekannt, ist der Verbrennungsmotor über eine erste Kupplung mit der Elektromaschine verbindbar. Die Elektromaschine wiederum ist über eine separate zweite Kupplung mit einem Fahrzeuggetriebe koppelbar. Bei einem 1 K-ISG - Antriebsstrang, wie er beispielsweise aus der DE 10 2005 051 382 A1 bekannt ist, entfällt hingegen eine zweite separate Kupplung zwischen der Elektromaschine und dem Getriebe bzw. dem Abtrieb. Die Elektromaschine kann dann direkt mit dem Eingang des Getriebes verbunden sein. Die Funktion einer optionalen zweiten Kupplung zwischen der Elektromaschine und dem Abtrieb kann, soweit dies bei dem jeweiligen Antriebskonzept vorgesehen bzw. erforderlich ist, auch von gegebenenfalls vorhandenen getriebeinternen Schaltkupplungen und/oder Schaltbremsen, wie sie beispielsweise in Getriebeautomaten verbaut sind oder von einer gegebenenfalls dem Getriebe antriebstechnisch vorgeschalteten Wandlerüberbrückungskupplung übernommen werden.

Weiterhin ist es bekannt, bei Kraftfahrzeugen mit automatisierten Getrieben oder Automatgetrieben zur Erhöhung des Fahrkomforts und der Betriebssicherheit einen Kriechmodus zu implementieren. Dabei wird vom Antrieb an den Abtrieb bzw. an die angetriebenen Fahrzeugräder ein Kriechmoment übertragen, welches auf einen vorgegebenen Kennwert oder eine Kennlinie einstellbar sein kann. In einem solchen Betriebszustand bewegt sich das Fahrzeug bei einer eingelegten Getriebeübersetzung, nicht betätigter Bremse und nicht betätigtem Fahrpedal mit sehr geringer Geschwindigkeit. An Steigungen ist mittels eines Kriechmodus auch die Realisierung einer zeitlich begrenzten Haltefunktion möglich.

Ein Kriechmodus ist je nach Antriebskonzept auf verschiedene Weise in den Antriebsstrang implementierbar und regelbar. Bei herkömmlichen Fahrzeugen mit einem automatisierten Schaltgetriebe und einer automatischen reibschlüssigen Anfahrkupplung kann die Realisierung des Kriechmodus durch eine entsprechende Ansteuerung der Anfahrkupplung erfolgen. Bei anderen herkömmlichen Fahrzeugen mit Automatgetrieben und einem hydrodynamischen Drehmomentwandler ist ein über den Wandler erzeugtes Kriechmoment im wesentlichen durch die Leerlaufdrehzahl des Verbrennungsmotors bestimmt. Bei Hybrid- oder Elektrofahrzeugen kann als Alternative zu herkömmlichen Reibkupplungen oder zu hydrodynamischen Wandlern eine vorhandene elektrische Antriebseinrichtung auch zur Erzeugung eines Kriechmodus eingesetzt werden.

Ein derartiger elektrischer Kriechbetrieb hat gegenüber Antriebssträngen mit einer Reibkupplung, die zur Übertragung eines Kriechmomentes im Schlupf betrieben wird, grundsätzlich den Vorteil, dass geringere mechanische Verluste bei der Kraftübertragung entstehen. Zudem entfällt die Gefahr einer Kupplungsüberhitzung. Daher scheint bei einem Hybridfahrzeug ein rein elektrisches Kriechen mittels der elektrischen Maschine bei im Leerlauf laufendem, vom Antriebsstrang abgekoppelten, Verbrennungsmotor naheliegend zu sein.

Dabei stellt sich jedoch als problematisch heraus, dass der elektrische Antriebsenergiespeicher des Hybridfahrzeuges sich durch den Betrieb der elektrischen Maschine in relativ kurzer Zeit soweit entleeren kann, dass der elektrische Kriechbetrieb abgebrochen oder unterbrochen werden muss, um den Energiespeicher im Generatormodus der Elektromaschine zu laden. Temporär stünde die Elektromaschine dann nicht oder eingeschränkt zum Antrieb des Fahrzeuges zur Verfügung. Ein elektrisches Dauerkriechen ist daher bei einem Hybridfahrzeug eher weniger vorteilhaft. Andererseits können bei einem Dauerkriechen über eine schlupfende Kupplung hohe Verlustleistungen an dieser entstehen, die eine entsprechende Baugröße mit einem erhöhten Bauraumbedarf und zusätzlichem Gewicht sowie relativ aufwendige Kühlmaßnahmen erfordern.

Aus der DE 101 58 536 B4 ist ein Antrieb für ein Elektro- oder Hybridfahrzeug bekannt, bei dem ein Kriechbetrieb über ein elektrisches Antriebsaggregat realisiert wird. Im Antriebsstrang des Fahrzeuges ist zwischen der elektrischen Maschine und einem Abtrieb eine Kupplungseinrichtung angeordnet. Die Kupplungseinrichtung kann beispielsweise eine als Reibkupplung ausgebildete Wandlerüberbrückungskupplung sein, die einem Automatgetriebe vorgeschaltet ist. Alternativ können auch eine oder mehrere Schaltkupplungen und/oder Schaltbremsen eines Automatgetriebes als die besagte Kupplungseinrichtung fungieren. Um die thermische Belastung der elektrischen Maschine im Kriechmodus bei hohen Drehmomentanforderungen, beispielsweise beim Kriechen oder Halten des Fahrzeuges an Steigungen oder beim Überfahren von Bordsteinkanten, zu verringern und gleichzeitig eine größere Dimensionierung der elektrischen Maschine und/oder der Kupplungseinrichtung zu vermeiden, kann bei Bedarf parallel zum Betrieb der elektrischen Maschine eine Kupplung der der Elektromaschine nachgeschalteten Kupplungseinrichtung im Schlupf betrieben werden. Sind der Kupplungseinrichtung mehrere Kupplungen zugehörig, so können diese auch abwechselnd oder additiv im Schlupf betrieben werden. Weist die elektrische Maschine zwei separat erregbare Wicklungen auf, so können diese im ständigen Wechsel betrieben werden. Durch eine Kombination dieser Mittel bzw. Maßnahmen wird eine thermische Überlastung sowohl der Kupplungseinrichtung als auch der elektrischen Maschine bei hohen Antriebsdrehmomenten bei sehr geringen Geschwindigkeiten oder bei einem hohem Dauerstillstandmoment vermieden.

Nachteilig daran ist, dass die Elektromaschine bei einem Dauerkriechen für einen relativ langen Zeitraum kontinuierlich motorisch betrieben wird. Zwar kann die Elektromaschine durch die getriebeseitige Kupplungseinrichtung und/oder durch die im Wechsel ansteuerbaren mehreren erregbaren Wicklungen unterstützt werden. Die relativ intensive Beanspruchung des elektrischen Antriebsenergiespeichers der elektrischen Maschine kann dennoch einen derartigen Dauerkriechbetrieb signifikant einschränken. Eine Elektromaschine mit mehreren separaten Wicklungen kann außerdem relativ kostenintensiv sein. Zudem ist der komplette Verzicht auf den Verbrennungsmotor beim Dauerkriechen bei einem Hybridantrieb eher ineffektiv.

Die EP 1 862 364 A, die die Merkmale des Oberbegriffs des Anspruchs 1 offenbart, beschreibt einzelne Steuerungsmodi zum Betrieb eines Verbrennungsmotors, einer Elektromaschine sowie einer verbrennungsmotornahen Reibungskupplung und einer getriebenahen Reibungskupplung eines Hybrid-Antriebsstranges eines Fahrzeugs. Ziel dieser einzelnen Steuerungsmodi besteht u. a. darin, beim Betrieb eines Hybrid-Antriebs eine Überhitzung der beiden Reibungskupplungen zu vermeiden. Dabei sind für verschiedene Betriebssituationen unterschiedliche Steuerungsanweisungen vorgesehen. Zu diesen Betriebssituationen gehören auch ein Kriechbetrieb sowie ein Betrieb zum Aufladen der Fahrzeugbatterie. Es wird der Übergang vom Kriechmodus zum Aufladebetrieb für die Batterie und zurück in den Kriechmodus beschrieben. Dieser Übergang wird in Abhängigkeit vom Ladezustand der Batterie gesteuert.

Vor diesem Hintergrund liegt der Erfindung die Aufgabe zugrunde, ein Verfahren und eine Vorrichtung zur Steuerung eines Kriechbetriebes eines Fahrzeugs mit einem Hybridantrieb zu schaffen, die ein kostengünstiges, effektives und bauteilschonendes Dauerkriechen ermöglichen und dabei eine zuverlässige Verfügbarkeit von elektrischer Energie für elektrische Verbraucher des Fahrzeuges gewährleisten.

Die Lösung dieser Aufgabe ergibt sich aus den Merkmalen des unabhängigen Anspruchs, während vorteilhafte Ausgestaltungen und Weiterbildengen der Erfindung den Unteransprüchen entnehmbar sind.

Der Erfindung liegt die Erkenntnis zugrunde, dass bei einem Hybridfahrzeug durch ein abwechselndes verbrennungsmotorisches Kriechen, welches über einen Schlupfbetrieb zur Verfügung stehender Reibkupplungen bzw. Reibbremsen zwischen der Elektromaschine und dem Abtrieb erzeugt wird, und ein elektromotorisches Kriechen, welches über eine geeignete Ansteuerung der Elektromaschine erzeugt wird, während dessen sich die Reibelemente thermisch erholen können, ein effektives und bauteilschonendes Dauerkriechen eines Fahrzeugs ermöglicht ist, ohne die Gefahr, die Kupplungen einerseits und einen elektrischen Antriebsenergiespeicher sowie die Elektromaschine andererseits zu überlasten bzw. übermäßig zu beanspruchen.

Demnach geht die Erfindung aus von einem Verfahren zur Steuerung eines Kriechbetriebes eines Fahrzeugs mit einem Hybridantrieb, mit einem Parallelhybrid-Antriebsstrang umfassend einen Verbrennungsmotor, wenigstens eine Elektromaschine, ein zwischen dem Verbrennungsmotor und der Elektromaschine angeordnetes, als ein Reibelement ausgebildetes erstes Schaltelement, mittels dem der Verbrennungsmotor mit der Elektromaschine verbindbar ist, ein Getriebe, einen Abtrieb und wenigstens ein zwischen der Elektromaschine und dem Abtrieb angeordnetes, als ein Reibelement ausgebildetes zweites Schaltelement, mittels dem die Elektromaschine mit dem Abtrieb wirkverbindbar ist.

Zur Lösung der gestellten Aufgabe sieht die Erfindung vor, dass der Kriechbetrieb abwechselnd durch einen mittels einem Betrieb wenigstens eines Schaltelementes im Schlupf erzeugten verbrennungsmotorischen Kriechmodus und durch einen mittels der Elektromaschine zumindest unterstützten elektromotorischen Kriechmodus erreicht wird.

Unter einem Kriechbetrieb eines Fahrzeuges mit einem Verbrennungsmotor und einem Getriebe wird verstanden, dass sich das Fahrzeug bei einer eingelegten Übersetzung und nicht betätigtem Fahrpedal mit einer so geringen Fahrgeschwindigkeit fortbewegt oder temporär gehalten wird, dass eine kraftschlüssige Verbindung zwischen dem Verbrennungsmotor und einem Abtrieb mit einem Drehzahlabfall des Verbrennungsmotors unterhalb einer Leerlaufdrehzahl einhergehen würde.

Unter einem Reibelement wird ein kraftübertragendes reibschlüssiges Schaltelement mit wenigstens zwei Reibpartnern verstanden, wobei bei vollständig eingerücktem Schaltelement Reibschluss hergestellt ist und im Schlupf eine Drehzahldifferenz zwischen dem primärseitigen und dem sekundärseitigen Reibpartner vorhanden ist, wobei Reibenergie in Wärme umgewandelt wird.

Durch den abwechselnden Schlupfbetrieb der Reibelemente und den elektrischen Kriechbetrieb werden die Reibelemente weniger belastet, da sie sich zwischenzeitlich im Reibschluss immer wieder abkühlen können, so dass sich im Mittel eine vergleichsweise niedrigere permanent zulässige Kupplungstemperatur einstellt, die ein zeitlich quasi unbegrenztes Kriechen des Fahrzeugs ermöglicht. Weiterhin wird der elektrische Energiespeicher nicht permanent entleert, da die Elektromaschine nur temporär als Antriebsaggregat für den Kriechbetrieb verwendet wird und zwischenzeitlich im generatorischen Betrieb den Energiespeicher aufladen kann. Da das Kriechen mittels der Elektromaschine grundsätzlich einen höheren Wirkungsgrad im Vergleich zum rein verbrennungsmotorischen Kriechbetrieb mit schlupfender Kupplung aufweist, fällt im Vergleich zu einem mit permanent andauerndem Kupplungsschlupf arbeitenden Kriechbetrieb insgesamt eine geringere Verlustleistung an. Dies gilt insbesondere bei mit Kriechmoment stillstehendem oder nahezu stillstehendem Fahrzeug, da hier der potenzielle Kupplungsschlupf besonders groß ist.

Gemäß der Erfindung wird bei einem Dauerkriechen des Fahrzeugs, zyklisch abwechselnd, in einem ersten Verfahrensschritt bei geschlossenem ersten Schaltelement die Elektromaschine über den Verbrennungsmotor generatorisch sowie wenigstens das zweite Schaltelement im Schlupf betrieben, und in einem zweiten Verfahrensschritt, ohne schlupfendes Schaltelement zwischen der Elektromaschine und dem Abtrieb, wenigstens die Elektromaschine zur Erzeugung des Kriechbetriebes motorisch betrieben.

Demnach wird im einfachsten Fall der Kriechbetrieb abwechselnd über einen Schlupfbetrieb des zweiten Schaltelementes, während das erste Schaltelement geschlossen ist, und über die Elektromaschine, während das zweite Schaltelement geschlossen sowie das erste Schaltelement geöffnet ist, realisiert. Das zweite Schaltelement kann dabei je nach Triebstrangkonfiguration eine getriebeexterne oder getriebeinterne Reibkupplung oder Schaltbremse sein.

Im zweiten Verfahrensschritt wird die Elektromaschine motorisch betrieben und der Kriechbetrieb mittels einer geeigneten Ansteuerung der Elektromaschine ohne schlupfendes Schaltelement zwischen der Elektromaschine und dem Abtrieb realisiert. Im einfachsten Fall erfolgt demnach in dieser Phase ein rein elektromotorisches Kriechen bei offenem erstem Schaltelement, also bei abgekoppeltem Verbrennungsmotor. Das zweite Schaltelement und gegebenenfalls weitere Schaltelemente zwischen der Elektromaschine und dem Abtrieb können in dieser Phase abkühlen.

Um auch diese Phase vorteilhaft zu verlängern, wird zusätzlich zum elektromotorischen Betrieb der Elektromaschine das erste Schaltelement im Schlupf betrieben. Dadurch trägt der Verbrennungsmotor über die verbrennungsmotorseitige Kupplung ein Kriechmoment zum elektrischen Kriechmodus bei, wodurch die Elektromaschine ein geringeres Drehmoment aufbringen muss und somit weniger elektrische Energie dem Energiespeicher entzieht. Dabei wird selbstverständlich eine Belastungsgrenze der Kupplung berücksichtigt, so dass eine Kupplungsüberhitzung ausgeschlossen ist.

Um die Phase des ersten Verfahrensschritts durch eine Entlastung des zweiten Schaltelementes noch verlängern zu können, kann vorgesehen sein, dass wenigstens ein weiteres, zwischen der Elektromaschine und dem Abtrieb angeordnetes, drittes Schaltelement abwechselnd oder gemeinsam mit dem zweiten Schaltelement im Schlupf betrieben wird. Demnach kann während des verbrennungsmotorischen Kriechens auch dynamisch von der zweiten Kupplung auf eine andere, dritte Kupplung oder Bremse, welche zwischen Elektromaschine und Abtrieb angeordnet ist, gewechselt werden. Grundsätzlich kann zwischen einem getriebeexternen zweiten Schaltelement und einem getriebeinternen dritten Schaltelement oder zwischen einem getriebeinternen zweiten Schaltelement und einem getriebeinternen dritten Schaltelement gewechselt werden. Möglich ist es auch, dass das zweite und das dritte Schaltelement gemeinsam im Schlupf betrieben werden, oder dass sogar mehr als zwei, zwischen der Elektromaschine und dem Abtrieb angeordnete Schaltelemente beteiligt sind. Entscheidend bei der Anordnung bzw. deren Betriebsweise ist, dass über die entsprechenden Schaltelemente zumindest zeitweise ein Kriechbetrieb unter akzeptablen thermischen Belastungen der Schaltelemente realisierbar ist.

Außerdem kann vorgesehen sein, dass bei einem vorrangigen Bedarf an elektrischer Energie die Elektromaschine generatorisch betrieben wird und gleichzeitig das erste Schaltelement im Schlupf betrieben wird.

Grundsätzlich ist es hinsichtlich Wirkungsgrad und Verlustleistung zwar ungünstig, im generatorischen Betrieb der Elektromaschine gleichzeitig die verbrennungsmotorseitige Kupplung im Schlupf zu betreiben, da die schlupfende Kupplung dann das gesamte Kriechmoment und das zusätzlich benötigte Lademoment übertragen muss. Tritt jedoch ein außergewöhnlicher Betriebsfall ein, bei dem ein dringender Bedarf an elektrischer Energie im Fahrzeug besteht, beispielsweise durch eine plötzliche Bordnetz-Anforderung, ist zweckmäßig die Möglichkeit vorzusehen, dass bei schlupfender erster Reibkupplung die Elektromaschine generatorisch betrieben wird. Somit kann jederzeit die Versorgung des Bordnetzes mit elektrischer Energie sichergestellt und ein Dauerkriechen auch ohne schlupfende Kupplung zwischen Elektromaschine und Abtrieb bei gleichzeitigem Generatorbetrieb fortgesetzt werden.

Der Wechsel zwischen den beiden Verfahrensschritten, also zwischen dem verbrennungsmotorischen und dem elektromotorischem Kriechmodus, erfolgt vorteilhaft abhängig vom Ladezustand des elektrischen Energiespeichers. Demnach kann der verbrennungsmotorische Kriechbetrieb angesteuert werden, wenn der Ladezustand des Energiespeichers auf einen unteren Ladezustand-Schwellwert abgesunken ist, und der elektromotorische Kriechbetrieb kann angesteuert werden, wenn der Ladezustand des Energiespeichers auf einen oberen Ladezustand-Schwellwert angestiegen ist. Grundsätzlich kann auch ein anderer Umschaltrhythmus, beispielsweise durch einen Zeitgeber, vorgesehen sein. Auch eine Berücksichtigung weiterer Betriebsparameter beim abwechselnden Dauerkriechen, beispielsweise ein maximal zulässiger Wert einer überwachten Kupplungstemperatur, ist möglich.

Durch den abwechselnden verbrennungsmotorischen und elektromotorischen Kriechbetrieb wird somit einerseits ein relativ hohes Niveau an stets verfügbarer elektrischer Energie ermöglicht, wobei eine Mindestenergiereserve sichergestellt ist, und andererseits ein kupplungsschonder, stets in einem zulässigen Kupplungstemperaturbereich sich befindender Schlupfbetrieb beim Dauerkriechen des Hybridfahrzeuges erreicht.

Zur Verdeutlichung der Erfindung ist der Beschreibung eine Zeichnung von Ausführungsbeispielen beigefügt. In diesen zeigt
- Fig. 1: eine schematische Darstellung eines Hybridantriebes eines Fahrzeugs zur Durchführung eines erfindungsgemäßen Verfahrens zur Steuerung eines Kriechbetriebes mit einem getriebeexternen zweiten Schaltelement, und
- Fig. 2: eine schematische Darstellung eines Hybridantriebes eines Fahrzeugs zur Durchführung eines erfindungsgemäßen Verfahrens zur Steuerung eines Kriechbetriebes mit einem getriebeexternen zweiten Schaltelement und einem getriebeinternen dritten Schaltelement.

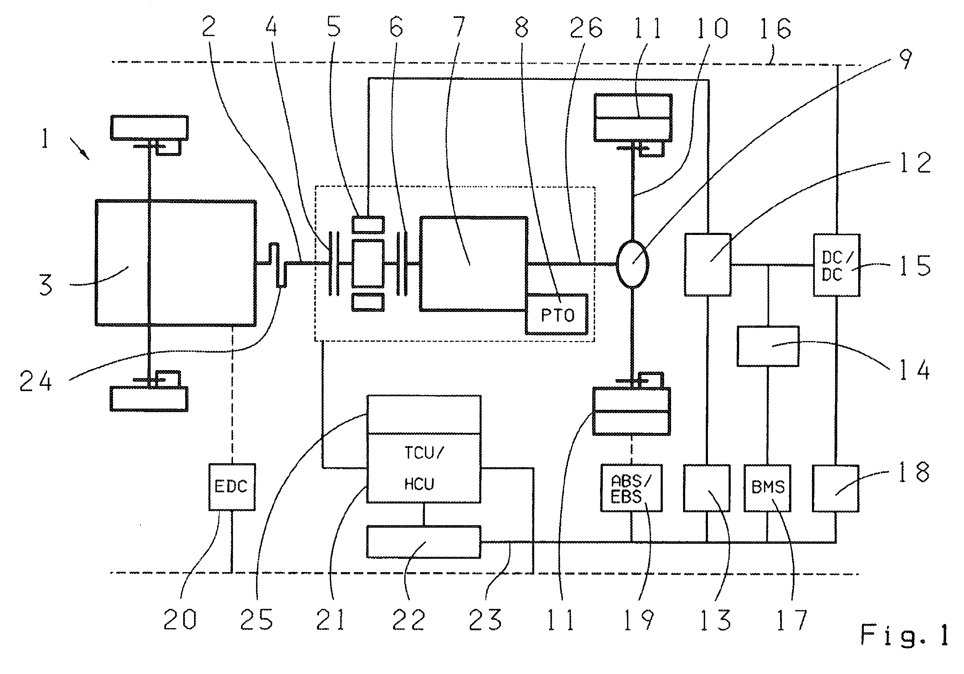

Demnach ist in Fig. 1 ein Schema eines Fahrzeug-Hybridantriebes 1 mit einem Parallelhybrid - Antriebsstrang 2 dargestellt, wie er beispielsweise für ein Nutzfahrzeug (Lkw, Bus, Sonderfahrzeug) vorgesehen sein kann. Der Antriebsstrang 2 weist einen Verbrennungsmotor 3, beispielsweise einen Dieselmotor, mit einer Kurbelwelle 24 auf, die über ein als Reibkupplung ausgebildetes erstes Schaltelement 4 mit einer Elektromaschine 5 verbindbar ist. Die Elektromaschine 5 ist wiederum über ein zweites als Reibkupplung ausgebildetes Schaltelement 6 mit einem Getriebe 7 koppelbar. Das zweite Schaltelement 6 ist dem Getriebe 7 antriebstechnisch vorgelagert. Dem Getriebe 7 kann weiterhin, wie in Fig. 1 angedeutet, ein nicht näher erläuterter Nebenabtrieb (PTO: Power Take-Off) 8 nachgeordnet sein. Über einen Abtrieb 26 und ein Differenzial 9 kann ein jeweils anliegendes Abtriebsmoment des Hybridantriebes 1 an eine Antriebsachse 10 und über diese an die Antriebsräder 11 weitergeleitet werden.

Die Elektromaschine 5 kann je nach Betriebssituation als elektrisches Antriebsaggregat oder als Generator betrieben werden. Dazu ist sie mit einem Umrichter 12 verbunden, der von einem Umrichter-Steuergerät 13 ansteuerbar ist. Über den Umrichter 12 ist die Elektromaschine 5 mit einem elektrischen Antriebsenergiespeicher 14, beispielsweise einer 340V-Hochvolt-Batterie (auch Supercaps sind möglich), verbunden. Im motorischen Betrieb wird die Elektromaschine 5 vom Energiespeicher 14 gespeist. Im generatorischen Betrieb, also beim Antrieb mittels des Verbrennungsmotors 3 und/oder im Rekuperationsbetrieb, wird der Energiespeicher 14 durch die Elektromaschine 5 aufgeladen. Weiterhin fungiert die Elektromaschine 5 als integrierter Startergenerator (ISG) zum Starten des Verbrennungsmotors 3.

Der Hochvoltkreis des Energiespeichers 14 bzw. die daran angeschlossenen Steuergeräte sind über einen bidirektionalen Gleichspannungswandler (DC/DC) 15 an ein Bordnetz (24V oder 12V) 16 angeschlossen. Der Energiespeicher 14 ist über ein Batteriemanagementsystem (BMS) 17 bezüglich seines Ladezustandes (SOC: State of Charge) überwach- und regelbar. Der Gleichspannungswandler 15 ist von einem Gleichspannungswandler-Steuergerät 18 ansteuerbar. Zudem ist ein Steuergerät 19 für nicht näher erläuterte Bremsregelungsfunktionen, insbesondere ein Antiblockiersystem (ABS) bzw. ein elektronisches Bremssystem (EBS) sowie ein weiteres Steuergerät 20 für eine elektronische Dieselregelung (EDC) des beispielhaft als Dieselmotor ausgebildeten Verbrennungsmotors 3 vorgesehen. Die einzelnen genannten Steuergeräte können auch, wenigstens zum Teil, in einem Steuergerät zusammengefasst sein.

Weiterhin ist eine integrierte Steuerungseinrichtung 21 angeordnet, in der ein Getriebesteuergerät (TCU: Transmission Control Unit), ein Hybridsteuergerät (HCU: Hybrid Control Unit) sowie verschiedene Betriebsfunktionen zusammengefasst sind. Der Steuerungseinrichtung 21 sind als eine Steuerungseinheit ausgebildete Steuerungsmittel 25 zur Ansteuerung der zur Verfügung stehenden Schaltelemente 4, 6 im Schlupf zugeordnet, die auch in die Steuerungseinrichtung 21 integriert sein können. Die Steuerungseinheit 25 ist derart ausgebildet, dass sie mit der Steuerungseinrichtung 21, die auch den Betrieb der Elektromaschine 5 regelt, bei der Regelung eines Kriechbetriebes zusammenwirkt. Zur Steuerung und Umschaltung der möglichen Antriebsmodi des Hybridantriebes 1 ist weiterhin eine zentrale Strategie-Einheit 22 vorhanden, die, vorteilhaft über einen Datenbus 23 (z.B. CAN), mit der Steuerungseinrichtung 21 und der Steuereinheit 25 sowie den weiteren relevanten Steuergeräten 13, 17, 18, 19 kommuniziert.

Der in Fig. 1 dargestellte Antriebsstrang 2 ist als eine 2K-ISG - Anordnung ausgebildet, d.h. mit einer Trenn- oder Anfahrkupplung als Schaltelement 4 zur Ankopplung des Verbrennungsmotors 3 an den Antriebsstrang 2 und zur Verbindung mit der elektrischen Maschine 5, sowie mit einem separaten zweiten Schaltelement 6 zwischen der Elektromaschine 5 und dem Getriebe 7 ausgestattet. Die Funktion des zweiten Schaltelementes 6 kann auch durch in Fig. 1 nicht dargestellte getriebeinterne Kupplungselemente, beispielsweise eine oder mehrere Schaltkupplungen und/oder Schaltbremsen eines Stufenautomaten ersetzt sein.

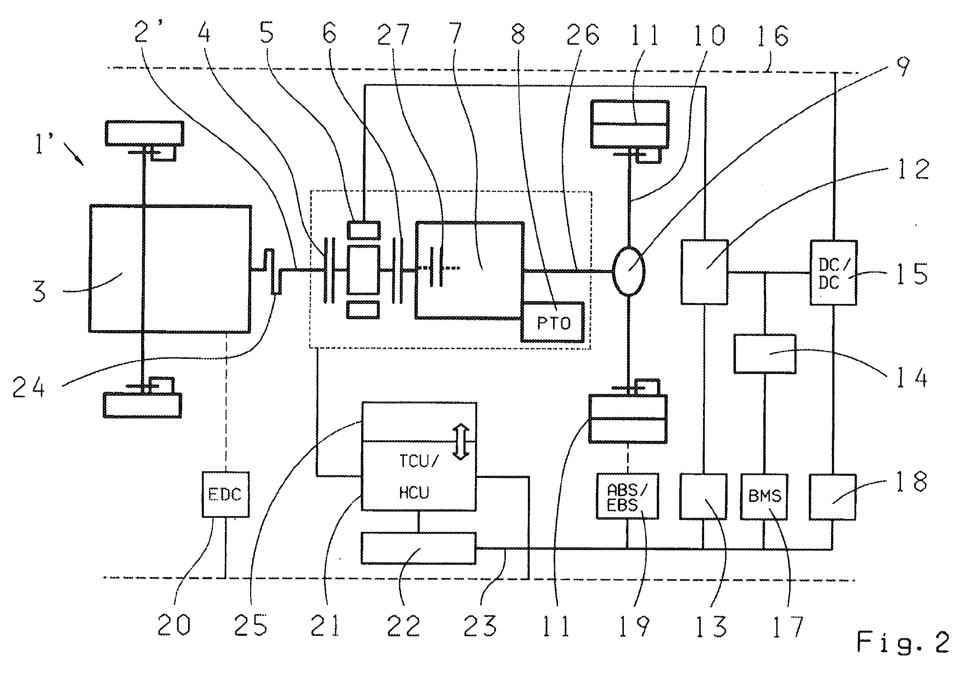

Fig. 2 zeigt hingegen eine 2K-ISG - Anordnung eines Hybridantriebes 1' mit einem Antriebsstrang 2', mit einem zusätzlichen dritten, getriebeinternen Schaltelement 27, das zur Realisierung eines Kriechbetriebes alternierend oder additiv mit dem zweiten Schaltelement 6 einsetzbar ist. Alternativ dazu könnten auch das zweite Schaltelement 6 und das dritte Schaltelement 27 beide getriebeintern angeordnet sein.

Ein erfindungsgemäßes Verfahren, welches mit dem Hybridantrieb 1 bzw. 1' durchführbar ist, beruht auf einem zyklisch abwechselnden verbrennungsmotorischen und elektromotorischen Kriechbetrieb in zwei Schritten, also auf einem abwechselnden Dauerkriechen mittels einem oder mehrere Reibelemente 6, 27 und mittels eine Elektromaschine 5.

In einem ersten, verbrennungsmotorischen, Verfahrensschritt ist die erste Reibkupplung 4 geschlossen; demnach sind der Verbrennungsmotor 3 und die Elektromaschine 5 reibschlüssig miteinander verbunden. Das zweite Schaltelement 6 wird im Schlupf betrieben, so dass über das Getriebe 7 mit einer eingelegten Übersetzung ein gewünschtes Kriechmoment am Abtrieb 26 erzeugt wird. Dabei wird die Elektromaschine 5 außerdem durch den Verbrennungsmotor 3 generatorisch betrieben, wodurch der Energiespeicher 14 geladen wird. Der Verbrennungsmotor 3 liefert somit im verbrennungsmotorischen Kriech-Verfahrensschritt sowohl Leistung über die schlupfende zweite Reibkupplung 6 zum Antrieb des Fahrzeugs als auch über die Elektromaschine 5 an den Energiespeicher 14.

Zur Entlastung der zweiten Reibkupplung 6, insbesondere um eine relativ niedrige mittlere Kupplungstemperatur einzuhalten und/oder um in dieser Phase einen besonders hohen Ladezustand gegebenenfalls bis zur vollständigen Aufladung des Energiespeichers 14 zu erreichen, wechselt der Schlupfbetrieb während des ersten Verfahrensschrittes auf das dritte Reibelement 27 (Fig.2, getriebeinterne Reibkupplung bzw. Reibbremse), wobei das zweite Schaltelement 6 vollständig eingerückt und der Kriechbetrieb über eine entsprechende Ansteuerung des dritten Schaltelementes 27 fortgesetzt wird.

Ist ein vorbestimmter Ladezustand des Energiespeichers 14 oder eine maximal zulässige Temperatur der eingesetzten Schaltelemente 6 und/oder 27 zwischen der Elektromaschine 5 und dem Abtrieb 26 erreicht, wechselt der Kriechbetrieb in den zweiten, elektromotorischen Verfahrensschritt. Dabei wird keines der beiden Schaltelemente 6, 27 zwischen der Elektromaschine 5 und dem Abtrieb 26 im Schlupf betrieben, so dass diese Schaltelemente 6, 27 geschlossen sind. Das erste Schaltelement 4 ist dabei geöffnet, so dass der Verbrennungsmotor 3 vom Antriebsstrang 2 bzw. 2' entkoppelt ist. Das Fahrzeug bewegt sich daher allein durch eine entsprechende Ansteuerung der Elektromaschine 5 in einem Kriechmodus, wobei sich der Energiespeicher 14 entleert, während das zweite Schaltelement 6 und gegebenenfalls das dritte Schaltelement 27 abkühlen. Ist ein unterer Ladezustand des Energiespeichers 14 erreicht, wechselt der Kriechbetrieb wieder in den ersten, verbrennungsmotorischen, Verfahrensschritt und so fort.

Um das Entladen des Energiespeichers 14 zu verzögern, d.h. um diese Endladephase zu verlängern, kann die erste Reibkupplung 4 über den Verbrennungsmotor 3 dabei unter Beachtung einer zulässigen Kupplungstemperatur im Schlupf betrieben werden, so dass die Kupplung 4 ein Drehmoment zum gewünschten Kriechmoment am Abtrieb 26 beiträgt und der Verbrauch an elektrischer Energie geringer ist. Tritt ein unvorhergesehener dringender Bedarf an elektrischer Energie für die Bordnetzversorgung auf, so kann bei schlupfender ersten Kupplung 4 die Elektromaschine 5 auch auf den generatorischen Betrieb umgeschaltet werden.

### Bezugszeichenliste

- 1, 1': Hybridantrieb
- 2, 2': Antriebsstrang
- 3: Verbrennungsmotor
- 4: Erstes Schaltelement
- 5: Elektromaschine
- 6: Zweites Schaltelement
- 7: Getriebe
- 8: Nebenabtrieb
- 9: Differenzial
- 10: Antriebsachse
- 11: Fahrzeugrad
- 12: Umrichter
- 13: Umrichter-Steuergerät
- 14: Elektrischer Antriebsenergiespeicher
- 15: Gleichspannungswandler
- 16: Bordnetz
- 17: Batteriemanagementsystem
- 18: Spannungswandler-Steuergerät
- 19: Elektronische Bremsregelung
- 20: Elektronische Dieselregelung
- 21: Steuerungseinrichtung
- 22: Betriebsstrategie-Einheit
- 23: Datenbus
- 24: Kurbelwelle
- 25: Steuerungsmittel
- 26: Abtrieb
- 27: Drittes Schaltelement
- ABS: Antiblockiersystem
- BMS: Batterie-Management-System
- DC/DC: Gleichspannungswandler (Direct Current)
- EBS: Elektronisches Bremssystem (Electronic Brake System)
- EDC: Elektronische Dieselregelung (Electronic Diesel Control)
- HCU: Hybridsteuerung (Hybrid Control Unit)
- TCU: Getriebesteuerung (Transmission Control Unit)
- PTO: Nebenabtrieb (Power Take-Off)

## Patentansprüche

1. Verfahren zur Steuerung eines Kriechbetriebes eines Fahrzeugs mit einem Hybridantrieb (1, 1'), mit einem Parallelhybrid-Antriebsstrang (2, 2') umfassend einen Verbrennungsmotor (3), wenigstens eine Elektromaschine (5), ein zwischen dem Verbrennungsmotor (3) und der Elektromaschine (5) angeordnetes, als ein Reibelement ausgebildetes erstes Schaltelement (4), mittels dem der Verbrennungsmotor (3) mit der Elektromaschine (5) verbindbar ist, ein Getriebe (7), einen Abtrieb (26) und wenigstens ein zwischen der Elektromaschine (5) und dem Abtrieb (26) angeordnetes, als ein Reibelement ausgebildetes zweites Schaltelement (6), mittels dem die Elektromaschine (5) mit dem Abtrieb (26) wirkverbindbar ist, wobei das Fahrzeug im Kriechbetrieb verbrennungsmotorisch, elektromotorisch oder diesbezüglich kombiniert angetrieben wird, wobei wenigstens ein Schaltelement (4, 6) im Schlupf betrieben wird, **dadurch gekennzeichnet, dass** bei einem Dauerkriechen des Fahrzeugs folgende Schritte zyklisch abwechselnd durchgeführt werden:
- in einem ersten Schritt wird bei geschlossenem ersten Schaltelement (4) die Elektromaschine (5) generatorisch betrieben und von dem Verbrennungsmotor (3) angetrieben sowie das zweite Schaltelement (6) im Schlupf betrieben,
- in einem zweiten Schritt wird das zweite Schaltelement (6) nicht schlupfend betrieben, die Elektromaschine (5) elektromotorisch betrieben, und das erste Schaltelement (4) derart im Schlupf betrieben, dass der Verbrennungsmotor (3) über das erste Schaltelement (4) ein verbrennungsmotorisches Antriebsmoment zu dem elektromotorisch erzeugten Antriebsmoment hinzufügt.

2. Verfahren nach Anspruch 1, **dadurch gekennzeichnet, dass** im ersten Schritt wenigstens ein weiteres, zwischen der Elektromaschine (5) und dem Abtrieb (26) angeordnetes, drittes Schaltelement (27), abwechselnd oder gemeinsam mit dem zweiten Schaltelement (6) im Schlupf betrieben wird.

3. Verfahren nach Anspruch 1 oder 2, dadurch **gekennzeich**n e t , dass bei einem vorrangigen Bedarf an elektrischer Energie die Elektromaschine (5) generatorisch betrieben wird und gleichzeitig das erste Schaltelement (4) im Schlupf betrieben wird.

4. Verfahren nach einem der Ansprüche 1 bis 3, **dadurch gekennzeichnet, dass** der Wechsel zwischen dem verbrennungsmotorischen und dem elektromotorischem Kriechmodus abhängig von einem Ladezustand eines elektrischen Energiespeichers (14) erfolgt.

5. Verfahren nach Anspruch 4, **dadurch gekennzeichnet, dass** der verbrennungsmotorische Kriechbetrieb angesteuert wird, wenn der Ladezustand des Energiespeichers (14) auf einen unteren Schwellwert abgesunken ist, und dass der elektromotorische Kriechbetrieb angesteuert wird, wenn der Ladezustand des Energiespeichers (14) auf einen oberen Schwellwert angestiegen ist.

## Claims

1. Method of controlling a creep mode of a vehicle with a hybrid drive (1, 1'), with a parallel hybrid drive train (2, 2') comprising a combustion engine (3), at least one electric machine (5), a first switching element (4) arranged between the combustion engine (3) and the electric machine (5) in the form of a friction element, with which the combustion engine (3) can be connected to the electric machine (5), a gearbox (7), an output (26) and at least one second switching element (6) in the form of a friction element arranged between the electric machine (5) and the output (26), with which the electric machine (5) can be actively connected to the output (26), wherein the vehicle when in creep mode is driven by the combustion engine, by the electric motor or by a combination thereof, wherein at least one switching element (4, 6) is operated with slip, **characterized in that** in the case of continuous creep of the vehicle, the following steps are carried out cyclically in alternation:
- in a first step, when a first switching element (4) is closed, the electric machine (5) is operated as a generator and driven by the combustion engine (3) and the second switching element (6) is operated with slip,
- in a second step the second switching element (6) is not operated with slip, the electric machine (5) is operated as an electric motor, and the first switching element (4) is operated with slip in such a manner that the combustion engine (3) adds a combustion engine drive torque via the first switching element (4) to the electric motor generated drive torque.

2. Method according to Claim 1, **characterized in that** in the first step at least one further third switching element (27) arranged between the electric machine (5) and the output (26) is operated with slip alternately to or in common with the second switching element (6)

3. Method according to Claim 1 or 2, **characterized in that** in the event of a high priority demand for electrical energy, the electrical machine (5) is operated as a generator and the first switching element (4) is simultaneously operated with slip.

4. Method according to any one of the Claims 1 to 3, **characterized in that** the change between the combustion engine creep mode and the electric motor creep mode takes place depending on a state of charge of an electrical energy storage device (14).

5. Method according to Claim 4, **characterized in that** the combustion engine creep mode is operated when the state of charge of the energy storage device (14) has fallen to a lower threshold value and that the electric motor creep mode is operated when the state of charge of the energy storage device (14) has risen to an upper threshold value.

## Revendications

1. Procédé de commande d'un fonctionnement avec fluage d'un véhicule comportant un système de propulsion hybride (1,1'), comportant un groupe propulseur hybride parallèle (2,2') comprenant un moteur à combustion interne (3), au moins un moteur électrique (5), un premier élément de commutation (4) réalisé comme un élément de friction, disposé entre le moteur à combustion interne (3) et le moteur électrique (5), au moyen duquel le moteur à combustion interne (3) peut être relié au moteur électrique (5), une transmission (7), une sortie d'entraînement (26) et au moins un deuxième élément de commutation (6) réalisé comme un élément de friction, disposé entre le moteur électrique (5) et la sortie d'entraînement (26), au moyen duquel le moteur électrique (5) peut être relié opérationnellement à la sortie d'entraînement (26), dans lequel le véhicule en fonctionnement avec fluage est propulsé soit par moteur à combustion, soit par moteur électrique ou selon une combinaison de ces derniers, dans lequel au moins un élément de commutation (4,6) est exploité en patinage, **caractérisé en ce que** lors d'un fluage de longue durée du véhicule, les étapes suivantes sont effectuées en alternance de manière cyclique :
• dans une première étape, lorsque le premier élément de commutation (4) est fermé, le moteur électrique (5) est exploité comme un générateur et est entraîné par le moteur à combustion interne (3) et le deuxième élément de commutation (6) est exploité en patinage,
• dans une deuxième étape, le deuxième élément de commutation (6) est exploité de manière non patinante, le moteur électrique (5) est exploité comme moteur électrique et le premier élément de commutation (4) est exploité en patinage de telle sorte que le moteur à combustion interne (3) ajoute par l'intermédiaire du premier élément de commutation (4) un couple d'entraînement de moteur à combustion au couple d'entraînement généré par le moteur électrique.

2. Procédé selon la revendication 1, **caractérisé en ce que** dans la première étape, au moins un troisième élément de commutation (27) supplémentaire, disposé entre le moteur électrique (5) et la sortie d' entraînement (26), est exploité en patinage en alternance ou conjointement avec le deuxième élément de commutation (6).

3. Procédé selon la revendication 1 ou 2, **caractérisé en ce qu'**en cas de besoin prioritaire en énergie électrique, le moteur électrique (5) est exploité comme générateur et simultanément le premier élément de commutation (4) est exploité en patinage.

4. Procédé selon une des revendications 1 à 3, **caractérisé en ce que** le changement entre le mode de fluage avec moteur à combustion et avec moteur électrique a lieu en fonction d'un état de charge d'un accumulateur d'énergie électrique (14).

5. Procédé selon la revendication 4, **caractérisé en ce que** le fonctionnement avec fluage du moteur à combustion est commandé quand l'état de charge de l'accumulateur d'énergie (14) est diminué à une valeur seuil inférieure, et **en ce que** le fonctionnement avec fluage du moteur électrique est commandé quand l'état de charge de l'accumulateur d'énergie (14) est augmenté à une valeur seuil supérieure.
